# EUROPÄISCHE PATENTSCHRIFT

(11) **EP 2 112 099 B1**
(45) Veröffentlichungstag und Bekanntmachung des Hinweises auf die Patenterteilung: **23.05.2012**
(21) Anmeldenummer: 08104879.5
(22) Anmeldetag: 25.07.2008
(51) Int. Cl.: B65G 21/20, B65H 5/22

(54) **Positioniervorrichtung zum Positionieren eines an seiner Oberfläche zu behandelnden Werkstückes**
Positioning device for positioning a workpiece to be processed on its surface
Dispositif pour positionner une pièce à être traitée sur sa surface

(30) Priorität: 21.04.2008 EP 08103632
(43) Veröffentlichungstag der Anmeldung: 28.10.2009
(73) Patentinhaber: Kesper Druckwalzen GmbH, 47809 Krefeld (DE)
(72) Erfinder: Kesper, Peer, 47800 Krefeld (DE)
(74) Vertreter: Cohausz & Florack

(56) Entgegenhaltungen:
- DE-A1- 10 017 259
- US-A- 3 592 334
- US-A1- 2001 046 404

## Beschreibung

Die Erfindung betrifft eine Positioniervorrichtung zum Positionieren eines an seiner Oberfläche zu behandelnden Werkstückes mit mindestens einem Gurtförderer, wobei der Gurtförderer ein Gurtband, mindestens eine Trommel und mindestens einen Rotationsantrieb für mindestens eine Trommel aufweist, wobei das Gurtband eine dem Werkstück zugewandte Tragseite und eine dem Werkstück abgewandte Stützseite aufweist, wobei das Gurtband Durchgangsöffnungen von der Tragseite zur Stützseite aufweist und Mittel zum Absenken des hydrostatischen Druckes auf der Stützseite des Gurtbandes vorgesehen sind und wobei das Gurtband endlos ist

Typischer Weise werden Werkstücke an ihrer Oberfläche mit Werkzeugen behandelt, die eine im Verhältnis zur Größe des Werkstückes nur kleine Fläche gleichzeitig behandeln können. Damit die gesamte Oberfläche des Werkstückes bearbeitet werden kann, werden Vorrichtungen benötigt, die das Werkstück und das Werkzeug relativ zueinander positionieren.

Insbesondere aber nicht nur in der Druckindustrie werden an die Vorrichtung dabei sehr hohe Anforderungen an die Positioniergenauigkeit gestellt. Die heutzutage verwendeten Druckauflösungen betragen dabei typischerweise mehr als 1200 dpi (dots per inch). Eine Positioniervorrichtung, die zur Belichtung von Druckplatten verwendet wird, muss daher eine Positioniergenauigkeit von deutlich weniger als einigen Mikrometern gewährleisten. Gleiches gilt selbstverständlich auch für Tintenstrahldrucker, die mit einer solchen Auflösung arbeiten. Als Vorrichtungen zur Positionierung des Werkstückes relativ zu dem Werkzeug werden beispielsweise so genannte X-Y-Tische verwendet.

Derartige X-Y-Tische bestehen aus einer Tragfläche, auf der das Werkstück befestigt wird und Linearführungen. Bei den Linearführungen kann es sich beispielsweise um Flachführungen, Schwalbenschwanzführungen, Prismenführungen handeln.

Allen diesen Linearführungen ist gemeinsam, dass sie bei der geforderten Präzision sehr aufwändig in der Herstellung und somit sehr kostenintensiv sind. Außerdem nehmen solche Vorrichtungen, auch wenn sie nicht im Betrieb sind, einen großen Raum ein.

Zur Positionierung von Gegenständen sind außer den genannten X-Y-Tischen auch Gurtförderer bekannt. Die bekannten Gurtförderer zeigen allerdings keine Positioniergenauigkeit, wie sie in der Druckindustrie gefordert wird. Dies lag zum einen daran, dass die Werkstücke auf den bekannten Gurtförderern nur ungenügend fixiert waren.

Aus der US 2001/0046404 A1 ist bekannt, dass das Gurtband zur Fixierung Durchgangsöffnungen von der Tragseite zur Stützseite aufweist und Mittel zum Absenken des hydrostatischen Druckes auf der Stützseite des Gurtbandes vorgesehen sind. Durch diese Maßnahmen lässt sich das zu behandelnde Werkstück auf dem Gurtband fixieren und mittels der Trommel mit Rotationsantrieb positionieren. Das hier gezeigte Gurtband ist außerdem endlos. Dadurch ist es möglich, für den Rotationsantrieb nur eine Drehrichtung vorzusehen. Außerdem können auch endlose Werkstücke kontinuierlich behandelt werden.

Die Positioniergenauigkeit eines derartigen Gurtförderers erfüllt die hohen Anforderungen der Druckindustrie nicht in hinreichendem Maße, da die Gurtbänder nicht mit der notwendigen Fertigungsgenauigkeit zur Verfügung standen.

Ausgehend von dem zuvor beschriebenen Stand der Technik liegt der Lehre der vorliegenden Erfindung die Aufgabe zu Grunde, eine sehr kostengünstige Vorrichtung für eine hervorragend exakte Positionierung eines an seiner Oberfläche zu behandelnden Werkstückes zur Verfügung zu stellen.

Überraschender Weise hat sich gezeigt, dass sich ein für den Siebdruck geeignetes galvanisch hergestelltes Rundsieb hervorragend als Gurtband eignet. Derartige Rundsiebe werden üblicherweise aus einem Nickelwerkstoff in vielen verschiedenen Abmessungen hergestellt. Die Rundsiebe lassen sich in galvanischen Verfahren mit geringem Aufwand herstellen, und sind somit sehr kostengünstig verfügbar.

Ein weiterer Vorteil des galvanischen Herstellungsverfahrens ist die damit erreichbare hohe Fertigungsgenauigkeit der Rundsiebe. Die für den Siebdruck geeigneten Rundsiebe stellen daher eine hervorragende Positioniergenauigkeit der Positioniervorrichtung sicher.

Typischerweise sind die Durchgangsöffnungen in solchen Rundsieben kleiner als 100 Mikrometer. Dadurch lässt sich auch in Randbereichen des Werkstückes eine sichere Fixierung auf dem Gurtband erzielen.

Insbesondere, wenn die Oberfläche des Werkstückes mit Farbe bedruckt wird, ist es vorteilhaft, wenn es sich bei dem Metallwerkstoff um einen Nickelwerkstoff handelt. Dieser weist eine hohe Beständigkeit gegenüber den in der Farbe üblicherweise verwendeten Chemikalien auf.

Eine nahtlose Gestaltung des Gurtbandes ermöglicht einen besonders gleichmäßigen Vortrieb und eine über die aufliegende Fläche des Werkstückes sehr homogene Fixierung auf dem Gurtband.

Aus Metallwerkstoff gefertigte Gurtbänder können den Vorteil haben, dass sie im laufenden Betrieb besonders unempfindlich gegenüber mechanischer Abnutzung sind.

Vorteilhafter Weise sind auf der Tragseite des Gurtbandes Dichtungselemente vorgesehen. Der Bereich, den das Werkstück auf der Tragseite einnimmt, wird dadurch nach außen abgedichtet. Somit kann der komplette Umgebungsdruck auf das Werkstück wirken und es findet kein Druckausgleich durch zwischen dem Werkstück und dem Gurtband strömendes Fluid statt.

In einer weiteren vorteilhaften Ausgestaltung der Erfindung verfügen zwei benachbarte Bereiche des Gurtbandes über voneinander unabhängige Mittel zum Absenken des hydrostatischen Druckes auf der Stützseite des Gurtbandes.

Damit ist es möglich zunächst nur einen Teilbereich des Werkstückes zu fixieren. Außerdem müssen die Mittel zum Absenken des hydrostatischen Druckes in einem Teilbereich nicht gegen das über die Öffnungen einströmende Fluid anarbeiten.

Besonders praxisgerecht ist eine Positioniereinrichtung mit einem Gurtförderer mit zwei Trommeln, bei dem die Mittel zum Absenken des hydrostatischen Druckes zwischen den Trommeln angeordnet sind. Dadurch können die Trommeln auf den Antrieb des Gurtbandes und die Mittel zum Absenken des hydrostatischen Druckes auf die Fixierung des Werkstückes auf dem Gurtband optimiert werden. Außerdem kann durch diese Ausgestaltung eine ebene Fläche zwischen den Trommeln gebildet werden.

Es kann besonders nützlich sein, wenn der Gurtförderer mindestens ein Abstützelement aufweist, welches das Gurtband auf seiner Stützseite abstützt. Dadurch wird die vom Werkstück auf das Gurtband übertragende Last wirksam abgeführt und führt nicht zu einer Belastung des Gurtbandes.

Des Weiteren lässt sich mit dem Abstützelement eine besonders gute Fixierung der Position des Werkstücks in Flächennormalenrichtung des Gurtbandes erreichen. Dies ist insbesondere dann von Vorteil, wenn die Oberfläche des Werkstückes mit Verfahren behandelt werden soll, die eine große Abstandsabhängigkeit aufweisen. Eine Nachregulierung des Abstandes des Werkzeuges von dem Werkstück ist dann seltener oder gar nicht mehr nötig.

Es ist insbesondere vorteilhaft, wenn sich das Abstützelement im Wesentlichen über die gesamte zwischen zwei Trommeln befindliche Fläche des Gurtbandes erstrecken. Damit ergibt sich eine für viele Gegenstände, zum Beispiel Druckplatten, vorteilhafte ebene Fläche.

In dem genannten Fall eines sich im Wesentlichen über die gesamte zwischen zwei Trommeln erstreckenden Abstützelements bietet die Verwendung eines aus einem Metallwerkstoff bestehenden Gurtbandes den besonderen Vorteil einer herabgesetzten Reibung zwischen Abstützelement und Gurtband.

Damit auch bei Verwendung eines sehr großen Abstützelements eine sichere Fixierung des Werkstückes auf dem Gurtband gewährleistet ist, ist es vorteilhaft, in dem Abstützelement Durchgangslöcher vorzusehen.

Durch eine erfindungsgemäße Positioniervorrichtung, die zwei Gurtförderer aufweist, wird es möglich, sehr große Werkstücke auch bei eingeschränkter Länge der Gurtbänder sicher zu positionieren.

In einer vorteilhaften Ausgestaltung ist zwischen diesen beiden Gurtförderern ein Stützelement vorgesehen. Diese Maßnahme ermöglicht es, die Gurtförderer weiter voneinander entfernt anzuordnen, ohne dass übermäßige Biegemomente auf das Werkstück ausgeübt werden.

Insbesondere, wenn das Stützelement Durchgangsöffnungen aufweist und Mittel zum Absenken des hydrostatischen Drucks auf der dem Werkstück abgewandten Seite des Stützelements vorgesehen sind, bietet es sich an, das Werkstück genau an dieser Stelle an seiner Oberfläche zu behandeln.

Es gibt nun eine Vielzahl von Möglichkeiten, die erfindungsgemäße Positioniervorrichtung auszugestalten und weiterzubilden. Hierzu wird beispielsweise verwiesen einerseits auf die dem Patentanspruch 1 nachgeordneten Patentansprüche, andererseits auf die Beschreibung zweier bevorzugter Ausführungsbeispiele in Verbindung mit den Zeichnungen. In den Zeichnungen zeigt:
- Figur 1: ein erstes Ausführungsbeispiel einer erfindungsgemäßen Positioniervorrichtung mit einem Gurtförderer im Querschnitt.
- Figur 2: eine Aufsicht auf den in Figur 1 dargestellten Gurtförderer des ersten Ausführungsbeispiels
- Figur 3: ein zweites Ausführungsbeispiel einer erfindungsgemäßen Positioniervorrichtung mit zwei Gurtförderern im Querschnitt.

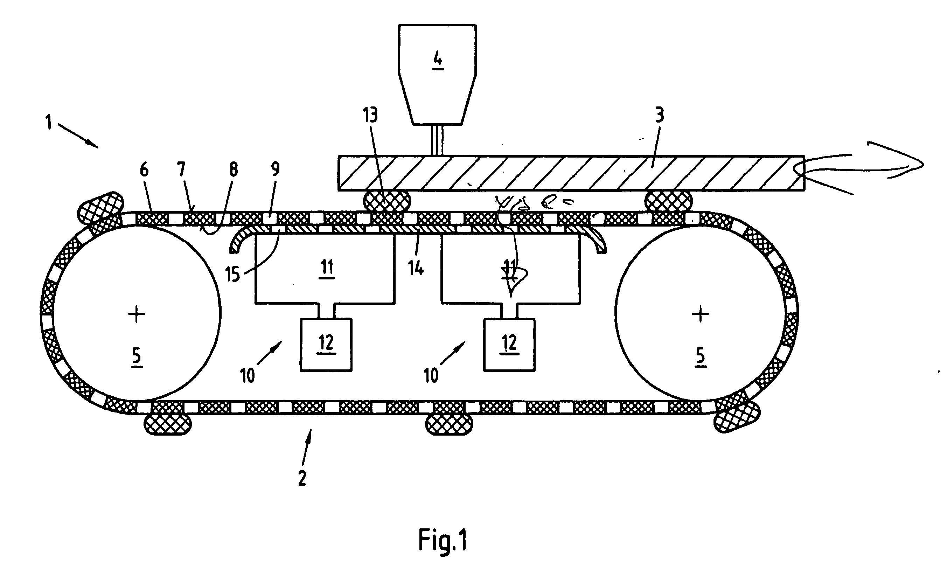

In der Figur 1 sind eine erfindungsgemäße Positioniervorrichtung 1 mit einem, bei dem hier dargestellten ersten Ausführungsbeispiel einzigen Gurtförderer 2, ein mit der Positioniervorrichtung 1 zu positionierendes Werkstück 3 und ein zur Behandlung der Oberfläche des Werkstücks 3 dienendes Werkzeug 4, z. B. ein Belichter, schematisch abgebildet.

Der dargestellte Gurtförderer 2 zeigt zwei Trommeln 5, über die ein endloses Gurtband 6, hier als ein für den Siebdruck geeignetes Rundsieb - sozusagen zweckentfremdet - ausgebildet, geführt ist. Zum Antrieb des Gurtbandes 6 weist eine der Trommeln 5 einen Rotationsantrieb auf. Es ist jedoch auch denkbar, dass beide Trommeln 5 mit synchronisierten Rotationsantrieben ausgestattet sind. Dadurch ließe sich das für den Antrieb notwendige Drehmoment vorteilhafter Weise über die Umfangsfläche von beiden Trommeln 5 auf das Gurtband 6 übertragen.

Das dargestellte Gurtband 6 weist eine Tragseite 7 zum Tragen des Werkstückes 3 und eine Stützseite 8 auf.

In dem Gurtband 6 sind Durchgangsöffnungen 9 von der Trag- 7 zur Stützseite 8 vorgesehen. In dem gezeigten Gurtband 6, d.h. hier dem zweckentfremdeten Rundsieb, sind die Durchgangsöffnungen 9 in regelmäßigen Abständen angeordnet. Es ist jedoch auch denkbar, die Durchgangsöffnungen 9 in unregelmäßigen Abständen anzuordnen.

Bei dem von dem Gurtband 6 getragenen Werkstück 3 kann es sich insbesondere um Druckplatten sowohl für den Lithodruck als auch für den Offsetdruck handeln. Gerade bei diesen Werkstücken zeigt sich die vorteilhafte hohe Präzision des Gurtförderers 2. Der erfindungsgemäße Gurtförderer 2 ist auch besonders geeignet, um Siebdruckformen zu positionieren, die unter Umständen an der Kontaktfläche mit dem Gurtband 6 eine unregelmäßige Beschaffenheit aufweisen.

Auf der Stützseite 8 des Gurtbandes 6 sind bei dem dargestellten Ausführungsbeispiel zwei voneinander unabhängige Mittel zum Absenken des hydrostatischen Druckes 10 angeordnet. Bei den Mitteln zum Absenken des hydrostatischen Druckes 10 handelt es sich bei dem gezeigten Ausführungsbeispiel um zwei von dem Gurtband 6 abgedeckte ansonsten geschlossene Hohlräume 11, aus denen Luft von jeweils einer Pumpe 12 abgepumpt wird.

Der in der Umgebung, und insbesondere auf das Werkstück 3 wirkende, höhere hydrostatische Luftdruck fixiert das Werkstück 3 auf dem Gurtband 6.

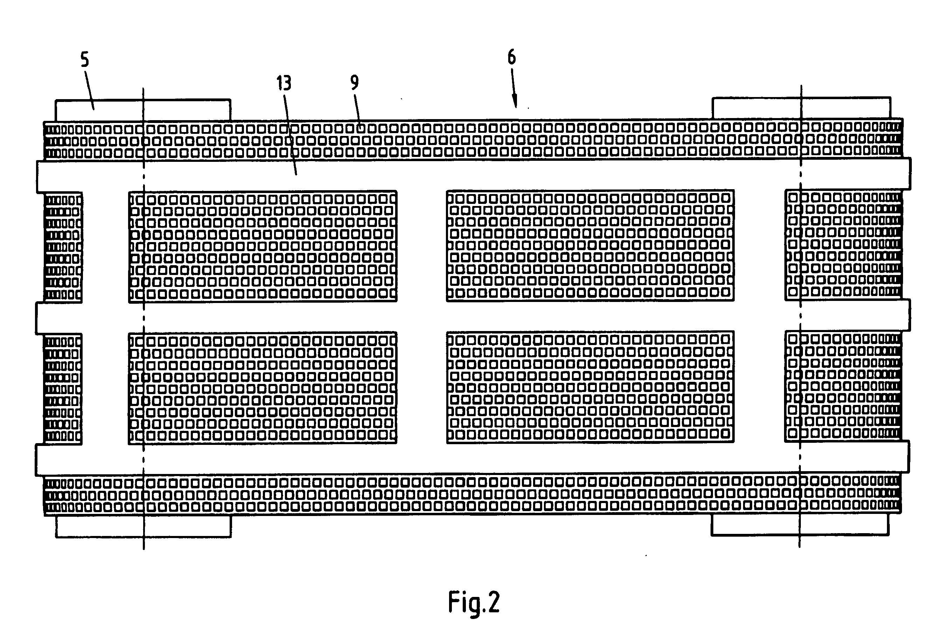

Zur Erhöhung des Anpressdrucks sind auf der Tragseite 7 des Gurtbandes 6, hier schematisch stark vergrößert dargestellte Dichtungselemente 13 angeordnet. Wie der Figur 2 zu entnehmen ist, dienen diese dazu, den Raum zwischen dem Werkstück 3 und dem Gurtband 6 zur Seite hin abzudichten. Eine regelmäßige Anordnung der Dichtungselemente 13 auf dem Gurtband erlaubt es, den Abdichtungseffekt bei unterschiedlich großen Werkstücken sicherzustellen. Eine Durchströmung dieses Bereiches mit dem Umgebungsfluid und eine sich daraus ergebende Verringerung des Anpressdruckes werden somit wirksam vermieden.

Zum Abstützen der auf das Gurtband 6 aufgebrachten Druckplatte ist zwischen den Trommeln 5 des dargestellten Gurtförderers 2 ein Abstützelement 14 angeordnet. Bei dem abgebildeten Abstützelement 14 handelt es sich um ein Metallblech, dass sich über im Wesentlichen die gesamte Fläche zwischen den Trommeln 5 erstreckt. Vorteilhafterweise sind die den Trommeln 5 zugeordneten Enden, des Abstützelementes 14 umgebogen. Dadurch lässt sich eine Abnutzung des Gurtbandes 6 an den Kanten des Bleches wirksam vermeiden.

Damit über das Abstützelement 14 ein Anpressdruck auf das Werkstück 3 ausgeübt werden kann, sind in das Abstützelement 14 ebenfalls Durchgangsöffnungen 15 eingeformt. Auf diese wird in dem, dem zur Behandlung der Oberfläche des Werkstücks 3 dienenden Werkzeug 4 gegenüberliegenden Bereich des Abstützelementes 14 verzichtet, um diese relative Positionierung zwischen Werkstück 3 und Werkzeug 4 weiter zu verbessern.

Durch die feste Position des Abstützelements 14 und die Technik der Fixation des Werkstückes 3 durch Umgebungsluftdruck ist auch bei flexiblen Materialien, insbesondere eines in einem Rahmen gespannten Siebdrucksiebes ein genau definierter Abstand zwischen Werkzeug 4 und Werkstück bestimmt. Auch ohne eine Nachregulierung der Position des Werkzeuges 4 ergeben sich somit immer gleich bleibende gute Behandlungsergebnisse.

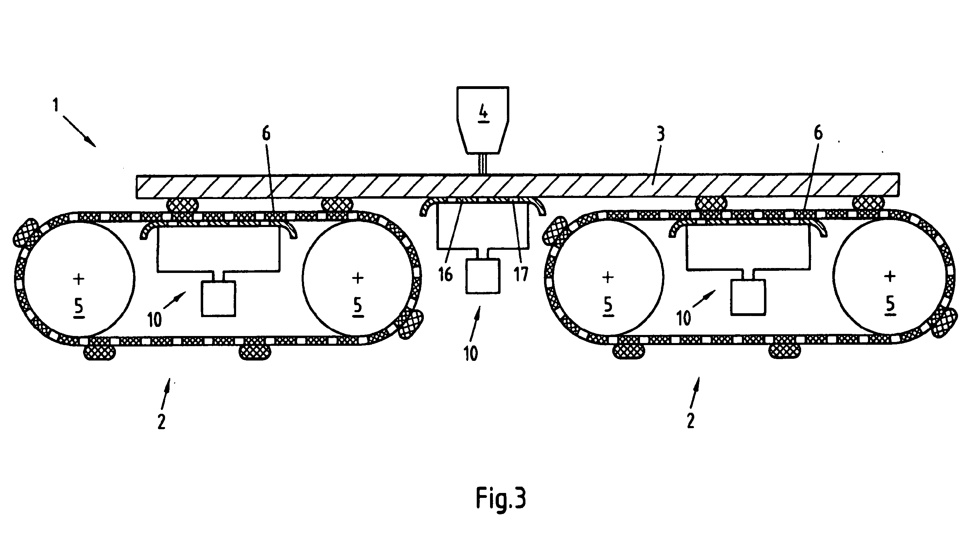

In der Figur 3 ist ein zweites Ausführungsbeispiel einer erfindungsgemäßen Positioniervorrichtung 1 mit hier zwei Gurtförderern 2, ein mit der Positioniervorrichtung 1 zu positionierendes Werkstück 3 und ein zur Behandlung der Oberfläche des Werkstücks 3 dienendes Werkzeug 4, z.B. ein Belichter, schematisch abgebildet.

Die zwei Gurtförderer 2, bezüglich deren Beschreibung auf die Ausführungen zur Figur 1 verwiesen wird, sind auf einer Ebene beabstandet voneinander angeordnet. Das zu bearbeitende Werkstück 3 erstreckt sich über den Abstand zwischen diesen Gurtförderern und wird von einem dort angeordneten Stützelement 16 abgestützt. Das beispielhaft gezeigte Stützelement 16 weist Durchgangsöffnungen 17 auf. In Verbindung mit den ebenfalls gezeigten Mittel 10 zum Absenken des Luftdrucks auf der dem Werkstück 3 abgewandten Seite, wird auf diese Weise eine besonders wirkungsvolle Fixierung in einer Richtung senkrecht zu dem Stützelement 16 erreicht. Auf diese Weise ergeben sich immer gleich bleibende gute Behandlungsergebnisse auch ohne eine Nachregulierung der Position des Werkzeuges 4.

### BEZUGSZEICHEN

- 1: Positioniervorrichtung
- 2: Gurtförderer
- 3: Werkstück
- 4: Werkzeug
- 5: Trommel
- 6: Gurtband
- 7: Tragseite
- 8: Stützseite
- 9: Durchgangsöffnungen
- 10: Mittel zum Absenken des hydrostatischen Druckes
- 11: geschlossene Hohlräume
- 12: Pumpe
- 13: Dichtungselement
- 14: Abstützelement
- 15: Durchgangsöffnungen im Abstützelement
- 16: Stützelement
- 17: Durchgangsöffnungen im Stützelement

## Patentansprüche

1. Positioniervorrichtung zum Positionieren eines an seiner Oberfläche zu behandelnden Werkstückes (3) mit mindestens einem Gurtförderer (2), wobei der Gurtförderer (2) ein Gurtband (6), mindestens eine Trommel (5) und mindestens einen Rotationsantrieb für mindestens eine Trommel aufweist, und wobei das Gurtband (6) eine dem Werkstück (3) zugewandte Tragseite (7) und eine dem Werkstück (3) abgewandte Stützseite (8) aufweist, wobei das Gurtband (6) Durchgangsöffnungen (9) von der Tragseite (7) zur Stützseite (8) aufweist und Mittel zum Absenken des hydrostatischen Druckes (10) auf der Stützseite (8) des Gurtbandes (6) vorgesehen sind, wobei das Gurtband (6) endlos ist, **dadurch gekennzeichnet** , d a s s das Gurtband (6) ein für den Siebdruck geeignetes galvanisch hergestelltes Rundsieb ist.

2. Positioniervorrichtung nach Anspruch 1, **dadurch gekennzeichnet, dass** das Gurtband (6) nahtlos ist.

3. Positioniervorrichtung nach einem der Ansprüche 1 bis 2, **dadurch gekennzeichnet, dass** das Gurtband (6) aus einem Metallwerkstoff besteht.

4. Positioniervorrichtung nach einem der Ansprüche 1 bis 3, **dadurch gekennzeichnet, dass** auf der Tragseite (7) des Gurtbandes (6) mindestens ein Bereich von mindestens einem Dichtungselement (13) umgeben ist.

5. Positioniervorrichtung nach einem der Ansprüche 1 bis 4, **dadurch gekennzeichnet, dass** benachbarte Bereiche des Gurtbandes (6) über voneinander unabhängige Mittel zum Absenken des hydrostatischen Druckes (10) auf der Stützseite (8) des Gurtbandes (6) verfügen.

6. Positioniervorrichtung nach einem der Ansprüche 1 bis 5, **dadurch gekennzeichnet, dass** der Gurtförderer (2) mindestens ein Abstützelement (14) aufweist, wobei das Abstützelement (14) das Gurtband (6) auf seiner Stützseite (8) abstützt.

7. Positioniervorrichtung nach einem der Ansprüche 1 bis 6, **dadurch gekennzeichnet, dass** der Gurtförderer (2) zwei Trommeln (5) aufweist und die Mittel zum Absenken des hydrostatischen Druckes (10) zwischen den Trommeln (5) angeordnet sind.

8. Positioniervorrichtung nach Anspruch 7, **dadurch gekennzeichnet, dass** sich das Abstützelement (14) im Wesentlichen über die gesamte zwischen zwei Trommeln (5) befindliche Fläche des Gurtbandes (6) erstreckt.

9. Positioniervorrichtung nach einem der Ansprüche 1 bis 8, **dadurch gekennzeichnet, dass** die Positioniervorrichtung (1) zwei Gurtförderer (2) aufweist.

10. Positioniervorrichtung nach Anspruch 9, **dadurch gekennzeichnet, dass** zwischen den Gurtförderern (2) ein Stützelement (16) vorgesehen ist.

11. Positioniervorrichtung nach Anspruch 10, **dadurch gekennzeichnet, dass** das Stützelement (16) Durchgangsöffnungen (17) aufweist und Mittel zum Absenken des hydrostatischen Drucks (10) auf der dem Werkstück (3) abgewandten Seite des Stützelements (16) vorgesehen sind.

## Claims

1. Positioning device for positioning a workpiece (3) which is to be treated on its surface, having at least one belt conveyor (2), wherein the belt conveyor (2) has a conveyor belt (6), at least one drum (5) and at least one rotary drive for at least one drum, wherein the conveyor belt (6) has a carrying side (8) facing the workpiece (3) and a support side (8) facing away from the workpiece (3), wherein the conveyor belt (6) has through holes (9) from the carrying side (7) to the support side (8) and means for lowering the hydrostatic pressure (10) are provided on the support side (8) of the conveyor belt (6), wherein the conveyor belt (6) is continuous, **characterised in that** the conveyor belt (6) is a rotary screen which is galvanically produced and is suitable for screen printing.

2. Positioning device according to Claim 1, **characterised in that** the conveyor belt (6) is seamless.

3. Positioning device according to either of Claims 1 and 2, **characterised in that** the conveyor belt (6) consists of a metal material.

4. Positioning device according to any one of Claims 1 to 3, **characterised in that** on the carrying side (7) of the conveyor belt (6) at least one area is enclosed by at least one sealing element (13).

5. Positioning device according to any one of Claims 1 to 4, **characterised in that** adjacent areas of the conveyor belt (6) have means for lowering the hydrostatic pressure (10) which are independent from one another on the support side (8) of the conveyor belt (6).

6. Positioning device according to any one of Claims 1 to 5, **characterised in that** the belt conveyor (2) has at least one support element (14), wherein the support element (14) supports the conveyor belt (6) on its support side (8).

7. Positioning device according to any one of Claims 1 to 6, **characterised in that** the belt conveyor (2) has two drums (5) and the means for lowering the hydrostatic pressure (10) are arranged between the drums (5).

8. Positioning device according to Claim 7, **characterised in that** the support element (14) essentially extends over the entire face of the conveyor belt (6) located between two drums (5).

9. Positioning device according to any one of Claims 1 to 8, **characterised in that** the positioning device (1) has two belt conveyors (2).

10. Positioning device according to Claim 9, **characterised in that** a supporting element (16) is provided between the belt conveyors (2).

11. Positioning device according to Claim 10, **characterised in that** the supporting element (16) has through holes (17) and means for lowering the hydrostatic pressure (10) are provided on the side of the supporting element (16) facing away from the workpiece (3).

## Revendications

1. Dispositif de positionnement pour positionner une pièce à travailler (3) qui doit être traitée sur sa surface, ayant au moins un transporteur à courroie (2), où le transporteur à courroie (2) a une courroie de transport (6), au moins un tambour (5) et au moins un entraînement rotatif pour au moins un tambour, où la courroie de transport (6) a un côté de transport (8) en face de la pièce à travailler (3) et un côté de support (8) dans la direction opposée à la pièce à travailler (3), où la courroie de transport (6) a des orifices passants (9) du côté de transport (7) au côté de support (8) et des moyens pour abaisser la pression hydrostatique (10) sont prévus sur le côté de support (8) de la courroie de transport (6), où la courroie de transport (6) est continue, **caractérisé en ce que** la courroie de transport (6) est un tamis rotatif qui est produit galvaniquement et est propre pour la sérigraphie.

2. Dispositif de positionnement selon la Revendication 1, **caractérisé en ce que** la courroie de transport (6) est sans soudure.

3. Dispositif de positionnement selon l'une ou l'autre des Revendications 1 et 2, **caractérisé en ce que** la courroie de transport (6) est constituée d'un matériau métallique.

4. Dispositif de positionnement selon une quelconque des Revendications 1 à 3, **caractérisé en ce que** sur le côté de transport (7) de la courroie de transport (6) au moins une zone est entourée par au moins un élément de scellement (13).

5. Dispositif de positionnement selon une quelconque des Revendications 1 à 4, **caractérisé en ce que** des zones adjacentes de la courroie de transport (6) ont des moyens pour abaisser la pression hydrostatique (10) qui sont indépendants l'un de l'autre sur le côté de support (8) de la courroie de transport (6).

6. Dispositif de positionnement selon une quelconque des Revendications 1 à 5, **caractérisé en ce que** le transporteur à courroie (2) a au moins un élément de support (14), où l'élément de support (14) supporte la courroie de transport (6) sur son côté de support (8).

7. Dispositif de positionnement selon une quelconque des Revendications 1 à 6, **caractérisé en ce que** le transporteur à courroie (2) a deux tambours (5) et les moyens pour abaisser la pression hydrostatique (10) sont disposés entre les tambours (5).

8. Dispositif de positionnement selon la Revendication 7, **caractérisé en ce que** l'élément de support (14) s'étend essentiellement sur toute la face de la courroie de transport (6) située entre deux tambours (5).

9. Dispositif de positionnement selon une quelconque des Revendications 1 à 8, **caractérisé en ce que** le dispositif de positionnement (1) a deux transporteurs à courroie (2).

10. Dispositif de positionnement selon la Revendication 9, **caractérisé en ce qu'**un élément de support (16) est prévu entre les transporteurs à courroie (2).

11. Dispositif de positionnement selon la Revendication 10, **caractérisé en ce que** l'élément de support (16) a des orifices passants (17) et des moyens pour abaisser la pression hydrostatique (10) sont prévus sur le côté de l'élément de support (16) dans la direction opposée à la pièce à travailler (3).
